# EUROPÄISCHE PATENTSCHRIFT

(11) **EP 2 649 565 B1**
(45) Veröffentlichungstag und Bekanntmachung des Hinweises auf die Patenterteilung: **21.11.2018**
(21) Anmeldenummer: 11794050.2
(22) Anmeldetag: 07.12.2011
(51) Int. Cl.: G06K 19/077, G06K 19/07, G07D 7/00, B42D 15/00

(54) **DATENTRÄGER, SICHERHEITSELEMENT UND VERFAHREN ZUM BEEINFLUSSEN DES FARBWECHSELS THERMOCHROMER FARBSCHICHTEN**
DATA CARRIER, SECURITY ELEMENT AND METHOD FOR INFLUENCING THE COLOR CHANGE OF THERMOCHROMIC LAYERS
SUPPORT DE DONNEES, ELEMENT DE SECURITE ET METHODE POUR INFLUENCER LE CHANGEMENT DE COULEURS DE COUCHES THERMOCHROMIQUES

(30) Priorität: 10.12.2010 DE 102010054053
(43) Veröffentlichungstag der Anmeldung: 16.10.2013
(73) Patentinhaber: Giesecke+Devrient Mobile Security GmbH, 81677 München (DE)
(72) Erfinder: BALDISCHWEILER, Michael, 81825 München (DE); ASCHAUER, Hans, 81829 München (DE); BORNSCHLEGL, Alexander, 81735 München (DE); GRUNDWÜRMER, Manuela, 81371 München (DE)
(86) Internationale Anmeldenummer: PCT/EP2011/006151
(87) Internationale Veröffentlichungsnummer: WO 2012/076171

(56) Entgegenhaltungen:
- WO-A1-2009/106242
- DE-A1-102006 001 487

## Beschreibung

Die Erfindung betrifft einen tragbaren Datenträger, ein Sicherheitselement für einen tragbaren Datenträger sowie ein Verfahren zum Beeinflussen des Farbwechsels von thermochromen Farbschichten auf einem tragbaren Datenträger.

Als tragbaren Datenträger wird insbesondere ein Datenträger mit entsprechender Sicherheitsfunktionalitäten, wie z.B. Smart Cards, Chipkarten, Token und/oder elektronische Identitätsdokumente, wie beispielsweise ein elektronischer Personalausweis, Reisepass etc mit auf einem Chip gespeicherten maschinenlesbaren Identifikationsdaten einer Person. Der Datenträger weist bevorzugt einen integrierten Schaltkreis mit funktionellen Einheiten, wie ROM, RAM, EEPORM, CPU, kontaktlosen und ggf. kontaktbehafteten Schnittstellen auf.

Als Thermochromie wird die Eigenschaft bestimmter Substanzen verstanden, bei Erwärmung oder Abkühlung, die Farbe zu ändern. Dieser Vorgang kann reversibel gestaltet werden, das heißt, ein erzeugter Farbwechsel wird durch entsprechende Wärmezufuhr oder Wärmeabfuhr rückgängig gemacht und die ursprüngliche Farbe des Ausgangszeitpunkts erhalten.

Es gibt vorrangig zwei Funktionsprinzipien für thermochrome Pigmente. Zum einen basierend auf Änderungen der Flüssigkristallkristallstruktur des jeweiligen Farbstoffes. Eine sog. cholestrische Phase (oder auch chiral nematische Phase) von Flüssigkristallen zeigt Selektivreflexionen von zirkular polarisiertem Licht eines bestimmten Wellenlängenbereichs, welche bei Erwärmung/ Abkühlung verändert werden, sodass unterschiedliche Farbeindrücke entstehen. Die cholesterische Phase verhält sich ansonsten ähnlich einem optischen Gitter als dispersives Element.

Zum anderen existieren auf sogenannten Leucofarbstoffen basierende reversible thermochrome Pigmente, bei denen der Inhalt einer Kapsel bei einer Umschlagstemperatur aufschmilzt, was zu einem Farbverlust führt. Nach dem Abkühlen und damit verbundenen Erstarren des Kapselinhalts kehrt die Farbe zurück.

Die Begriffe Abkühlung, Erwärmung, Wärmezufuhr oder Wärmeabfuhr sind gleichbedeutend mit den Begriffen thermische Energieänderung oder thermische Energiedifferenz. Hierbei wird vorrangig der Anstieg oder Abfall der Umgebungstemperatur des tragbaren Datenträgers verstanden, welche eine Temperaturänderung des Datenträgers zur Folge hat.

Die Verwendung thermochromer Farbschichten auf tragbaren Datenträgern ist längst bekannt und beispielsweise in der WO 2009/106242 A1 beschrieben. Dabei wechselt eine thermochrome Farbschicht durch Wärmezufuhr ihre Farbe.

Auch aus dem Dokument DE 10 2006 001 487 A1 ist der Einsatz thermochromer Schichten bekannt. Zur Ansteuerung einzelner Bereiche sind unterhalb der thermochromen Schicht Heizelemente vorgesehen, die ein gezieltes Umschlagen der Farbschichten ermöglichen.

Ferner beschreibt die WO 2009/106242 A1 ein Wertdokument mit thermochromer Anzeige. Unterhalb der thermochromen Farbschicht sind ohmsche Widerstände angeordnet, deren Erwärmung zum Farbwechsel führt.

Die tragbaren Datenträger weisen entweder einen mittels Spritzgusstechnik hergestellten monolithischen Körper oder einen durch Laminieren unterschiedlicher Materialien, zum Beispiel Polyvinylchlorid (PVC), Polyethylen (PE), Polyethylenterephthalat(PET), Acrylnitril-Butadien-StyrolCopolymerisat (ABS), Polycarbonat (PC) hergestellten Datenträgerkörper auf.

Die zur Herstellung von Datenträgerkörpern verwendeten Materialien weisen im Vergleich zu Metallen eine geringe Wärme- und Temperaturleitfähigkeit auf. Die Wärmeleitfähigkeit λ ist die Eigenschaft eines Festkörpers, thermische Energie mittels Wärmeleitung in Form von Wärme zu transportieren und liegt im Beispiel von PVC bei 0,15W/ (m*K) und im Beispiel von PE bei 0,35W/ (m*K). Die Temperaturleitfähigkeit a ist die Materialeigenschaft, die zur Beschreibung der zeitlichen Veränderung der räumlichen Verteilung der Temperatur durch Wärmeleitung als Folge einer Temperaturänderung und liegt im Beispiel von PVC bei 0,11 * 10⁻⁶ m²/s und im Beispiel von PE bei 0,17 * 10⁻⁶ m²/s.

Die zur Herstellung von Datenträgerkörpern verwendeten Materialien weisen weiterhin im Vergleich zu wärmespeichernden Materialien eine geringe Wärmekapazität c auf. Die Wärmekapazität eines Materials gibt an, wie viel thermische Energie pro Temperaturänderung gespeichert werden kann und liegt bei PVC bei 0,96kJ/(kg*K) und bei PE bei 2,30kJ/(kg*K).

Die geringe Wärme- und Temperaturleitfähigkeit sowie geringe Wärmekapazität der Datenträgermaterialien führen zu einem schlechteren Farbwechsel der thermochromen Farbschichten, sodass der gewünschte Thermochromeffekt bei Temperaturänderungen verlangsamt wird bzw. durch die geringe Temperaturleitfähigkeit nicht der gesamte thermochrome Bereich einem Farbwechsel (auch als Farbumschlag bezeichnet) unterzogen wird.

Ausgehend von diesem Stand der Technik ist es die Aufgabe der hier beschrieben Erfindung, den Farbwechsel der thermochromen Farbschicht auf tragbaren Datenträgern zu verbessern. Insbesondere soll der Farbwechsel steuerbar sein, das heißt verlangsamt oder beschleunigt sein. Insbesondere soll die thermochrome Farbschicht in ihrer Aufgabe als Echtheits- und Sicherheitselement zum Verifizieren der Echtheit des Datenträgers verbessert werden. Dabei soll der tragbare Datenträger weiterhin kosteneffizient herstellbar sein.

Die Aufgabe der Erfindung wird durch die in den nebengeordneten unabhängigen Patentansprüchen beschriebenen Maßnahmen gelöst. Vorteilhafte Ausgestaltungen sind in den jeweils abhängigen Ansprüchen beschrieben.

Die Aufgabe wird insbesondere durch einen tragbaren Datenträger, insbesondere eine Chipkarte gelöst, aufweisend einen Datenträgerkörper und zumindest bereichsweise eine, für einen Betrachter des Datenträgers sichtbar angeordnete thermochrome Farbschicht im Datenträgerkörpers, wobei durch Einwirken einer thermischen Energieänderung auf die Farbschicht ein Farbwechsel der thermochromen Farbschicht hervorgerufen ist. Unterhalb der thermochromen Farbschicht ist ein den Farbwechsel beeinflussendes Material in den Datenträgerkörper eingebracht ist.

Als thermochrome Farbschicht wird in dieser Anmeldung eine mit thermochromen Pigmenten versehene Farbe verstanden, die insbesondere in einem Druckverfahren im Datenträger angeordnet ist. Die theromochromen Pigmente sind entweder Flüssigkristalle oder Leucofarben der eingangs beschriebenen Art.

Unter Einbringen des beeinflussenden Materials ist vorrangig das Beschichten einer zu laminierenden Schicht des Datenträgerkörpers mittels Druckverfahren verstanden. Dabei kann diese Schicht aus einem der Materialien PE, PET, PVC, PC oder ABS beziehungsweise anderen zu bevorzugenden theromoplastischen Kunststoffen sein. Das Material kann auch in Form von Partikeln in den Datenträgerkörper eingebracht sein, beispielsweise durch Zumengen zu anderen Stoffen. Die Anzahl und Größe der Partikel ist hier nicht einschränkend solange das Einbringen dazu dient, dass der Farbwechsel der thermochromen Farbschicht in der hierin beschriebenen Art und Weise positiv beeinflusst wird.

Das beeinflussende Material weist vorrangig verbesserte Materialeigenschaften in Bezug auf die Wärmekapazität, die Wärmeleitfähigkeit und die Temperaturleitfähigkeit auf. Auf diese Weise wird der Farbwechsel verbessert.

Besonders vorteilhaft ist, wenn der Wärmeleitkoeffizient des beeinflussenden Materials größer als der Wärmeleitkoeffizient des Datenträgerkörpermaterials, zum Beispiel PVC, PET, PE, PC, ABS ist. Insbesondere ist das beeinflussende Material ein Wärmeableitmaterial, beispielhaft ein Graphitmaterial. Graphit als eine natürliche Erscheinungsform des Kohlenstoffs hat eine Wärmeleitfähigkeit von 119 bis 165 W/(m*K) und eine Temperaturleitfähigkeit von 74 - 103*10⁻⁶ m²/s. Da die thermochrome Farbschicht auf der Oberseite des Datenträgerkörpers ist, wird durch das idealerweise unmittelbar unterhalb der Farbschicht angeordnete beeinflussende Material die Wärme besser transportiert. Somit kommt es zu einem schnelleren, homogeneren und vollflächigen Farbwechsel im gesamten Bereich der Farbschicht. Zusätzlich lässt sich Graphit sehr gut in einem Druckvorgang in den Kartenkörper einbringen, sodass kein erheblicher Mehraufwand bei der Herstellung des erfindungsgemäßen Datenträgers vorhanden ist. Weiterhin wird bei thermochromen Farbschichten prinzipiell ein Schwarzdruck benötigt, um den Farbwechsel sichtbar zu machen. Dieser Schwarzdruck ist notwendig, da bei cholesterischen Flüssigkristallen immer nur Licht einer Zirkularpolarisationsrichtung reflektiert wird. Licht der anderen Drehrichtung kann das Material ungehindert durchdringen. Wenn nun also der Hintergrund nicht schwarz oder zumindest dunkel ist, ist der Farbeffekt stark gedämpft. Durch Verwendung des Graphits kann der benötigte Schwarzdruck entfallen.

In einer vorteilhaften Ausgestaltung ist die Wärmekapazität des beeinflussenden Materials größer als die Wärmekapazität des Datenträgerkörpermaterials. Insbesondere weist das beeinflussende Material die Eigenschaft eines Latentwärmespeichers auf, wodurch die thermische Energie verlustarm über einen entsprechend langen Zeitraum gespeichert. Als Materialien sind sogenannte Phasenwechselmaterialien (PCM) insbesondere auf Paraffinbasis besonders geeignet. Die spezifische Wärmekapazität ist hier abhängig von dem Bereich der Temperaturänderung und liegt so in der Größenordnung 4 - 6 kJ/(kg*K). Dadurch wird die Erwärmung oder Abkühlung der oberhalb des Wärme speichernden Materials befindlichen thermochromen Farbschicht verlangsamt, da eine gewisse Wärmemenge in diesem Material zwischengespeichert wird.

In einer besonderen Ausgestaltung bilden die thermochrome Farbschicht und das beeinflussende Material ein Sicherheits- bzw. Echtheitsmerkmal für den tragbaren Datenträger. Dabei ist das beeinflussende Material in Form geometrischer Figuren, Muster und/oder alphanumerischer Zeichen in den Datenträgerkörper eingebracht. Insbesondere wird in den Bereich unterhalb der thermochromen Farbschicht nicht vollflächig das beeinflussende Material eingebracht. Bei der Erwärmung und/oder Abkühlung des Datenträgers wird zunächst der gesamte Bereich der thermochromen Farbschicht der thermischen Energieänderung ausgesetzt. Durch das beeinflussende Material wird die ausgebildete geometrische Figur, Muster oder Zeichen bei Erwärmung/ Abkühlung erkennbar, wodurch die Echtheit des Datenträgers verifiziert ist. Der Form und Gestalt des beeinflussenden Materials sind erfindungsgemäß keine Grenzen gesetzt.

In einer weiteren vorteilhaften Ausgestaltung weist der Datenträger weiterhin ein integriertes Chipmodul und ein Eingabemittel, insbesondere in Form eines Dehnungsmessstreifens unterhalb der thermochromen Farbschicht auf. Dehnungsmessstreifen als Eingabemittel sind aus der DE 10 2010 052 985, DE 10 2010 052 983 sowie DE 10 2010 052 992, eingereicht am 30. November hinreichend bekannt und auf die gesamte Offenbarung dieser Anmeldungen wird hier ausdrücklich Bezug genommen. Das Kombinieren von Dehnungsmessstreifen mit thermochromen Farbschichten ist darüber hinaus aus der Parallelanmeldung dieser Anmeldung, die am gleichen Tag angemeldet wurde mit dem Anmelderaktenzeichen 512197 bekannt und auf die gesamte Offenbarung dieser Anmeldung wird hier ausdrücklich Bezug genommen. Somit wird die thermische Energieänderung an der Oberseite des Datenträgers durch die Betätigung des Eingabemittels durch die Körpertemperatur des Benutzers hervorgerufen. Da die Temperatur des Datenträgerkörpers erwartungsgemäß gleich der Umgebungstemperatur ist, wird durch das Betätigen die thermochrome Farbschicht erwärmt. Durch das beeinflussende Material werden die gewünschten Farbkippeffekte erzielt. Der Benutzer erhält somit ein verbessertes Feedback über seine getätigte Eingabe. Insbesondere sind Schwankungen des Farbwechsels aufgrund von Temperaturschwankungen der Umgebungstemperatur und der benutzerindividuellen Körpertemperatur geringer oder im Idealfall verhindert.

Besonders vorteilhaft ist eine Ausgestaltung, bei der unterhalb des beeinflussenden Materials ein resistives Element in den Datenträgerkörper eingebracht ist. Das resistive Element ist insbesondere ein elektrischer Widerstand, der von einem integrierten Halbleiterchip ansteuerbar ist. Der elektrische Widerstand ist in diesem Fall ein Heizelement, welches den Farbwechsel zusätzlich beeinflusst. Die thermochrome Farbschicht kann insbesondere eine erste und eine zweite Farbkipptemperatur aufweisen, sodass bei Berührung durch den Benutzer ein erster Farbkippeffekt und bei Ansteuerung durch den Halbleiterchip ein zweiter Farbkippeffekt auftritt, sodass ein mehrstufiges Feedback ermöglicht ist. Das beeinflussende Material beschleunigt und/ oder verlangsamt den Effekt in vorteilhafter Weise.

In einer alternativen Ausgestaltung der Erfindung ist das resistive Element direkt und ohne Einwirken des integrierten Halbleiterchips von einem elektromagnetischen Feld, insbesondere einem Nahfeld angeregt.

Ebenfalls im Erfindungsgedanken ist ein Sicherheitselement für einen tragbaren Datenträger mit einem Datenträgerkörper und zumindest bereichsweise einer thermochromen Farbschicht auf einer Oberseite des Datenträgerkörpers. Dabei wird durch Einwirken einer thermischen Energieänderung auf die Farbschicht ein Farbwechsel an der thermochromen Farbschicht hervorgerufen. Unterhalb der thermochromen Farbschicht wird ein den Farbwechsel beeinflussendes Material in den Datenträgerkörper eingebracht. Das beeinflussende Material ist in Form einer geometrischer Figuren, Muster und/oder alphanumerischer Zeichen unmittelbar unterhalb der thermochromen Farbschicht eingebracht.

Ebenfalls im Erfindungsgrundgedanken ist ein Verfahren zum Beeinflussen des Farbwechsels einer thermochromen Farbschicht auf einem tragbaren Datenträger mittels eines in den Datenträgerkörper unterhalb der Farbschicht eingebrachten Materials mit folgenden Verfahrensschritten. Erstens wird zumindest bereichsweise die thermische Energie des Datenträgerkörpers an einer Oberseite geändert. Zweitens wird die geänderte thermische Energie mittels des eingebrachten Materials derart abgeleitet, dass der mit der thermochromen Farbschicht erzeugte Farbwechsel an der Oberseite des Datenträgers beschleunigt wird.

Ebenfalls im Erfindungsgrundgedanken ist ein Verfahren zum Beeinflussen des Farbwechsels einer thermochromen Farbschicht auf einem tragbaren Datenträger mittels eines in den Datenträgerkörper unterhalb der Farbschicht eingebrachten Materials mit folgenden Verfahrensschritten. Erstens wird zumindest bereichsweise die thermische Energie des Datenträgerkörpers geändert. Zweitens wird die geänderte thermische Energie in dem eingebrachten Material derart gespeichert, dass der mit der thermochromen Farbschicht erzeugte Farbwechsel an der Oberseite des Datenträgers verlangsamt wird.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Figur 1: Ein erstes Ausführungsbeispiel eines erfindungsgemäßen tragbaren Datenträgers;
- Figur 2: Eine besonders vorteilhafte Ausführung des in Figur 1 dargestellten Datenträgers;
- Figur 3: Eine vorteilhafte Weiterbildung des in Figur 2 dargestellten Datenträgers;
- Figur 4: die Draufsicht auf Ausführungsbeispiele erfindungsgemäßer Sicherheitselemente auf einem tragbaren Datenträger

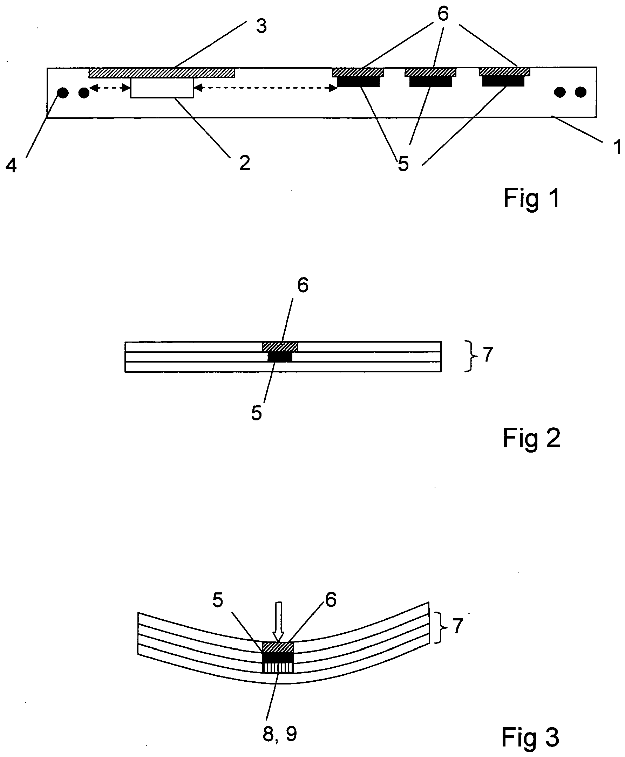

Figur 1 zeigt einen tragbaren Datenträger 1 mit einem in den Datenträgerkörper eingebrachten integrierten Chipmodul 2. Der Datenträgerkörper der Figur 1 ist monolithisch und beispielsweise im Spritzgussverfahren hergestellt. Das Chipmodul weist ein Kontaktfeld 3 zur kontaktbehafteten Kommunikation mit einem Terminal auf. Weiterhin oder alternativ zum Kontaktfeld 3 ist eine Antenne 4 in den Datenträgerkörper eingebracht, durch die eine kontaktlose Kommunikation mit einem Terminal ermöglicht ist. Insbesondere ist hier die Nahfeldkommunikation vorgesehen, beispielsweise gemäß ISO 14443 Standard. Andere RFID oder NF- Kommunikationen sind vom Erfindungsgegenstand nicht ausgeschlossen. Der Datenträger 1 ist insbesondere eine Chipkarte deren Anwendungsbereich in keiner Weise eingeschränkt ist. Insbesondere sind Kredit- und Debitkarten, Gesundheitskarten, elektronische Identifikationskarten, Führerschein, Reisepass, Zutrittsberechtigungskarten und dergleichen zu nennen. Alternativ können USB-Token unter dem Begriff des erfindungsgemäßen Datenträgers 1 verstanden werden.

Der Datenträger 1 der Figur 1 weist weiterhin auf einer Oberseite mehrere Bereiche einer thermochromen Farbschicht 6 auf. Die Bereiche können spezielle Formgebungen aufweisen, teilflächig oder vollflächig auf der Oberseite des Datenträgers ausgestaltet sein. Unterhalb der bereichsweisen Farbschicht 6 ist ein den Farbewechsel der Farbschicht 6 beeinflussendes Material 5 angeordnet. Wie eingangs bereits erwähnt kann das beeinflussende Material ein Wärme speicherndes Material oder ein Wärme ableitendes Material sein.

In der Ausführung gemäß Figur 1 ist das Material 5 ein Graphitmaterial, welches die auf den Datenträger 1 einwirkende Temperaturänderung aufgrund der guten Temperaturleitfähigkeit schnell verteilt. Auf diese Weise ist durch die Berührung des Datenträgers 1 mittels Finger ein sich gleichmäßig ausbreitender Farbkippeffekt erzielt. Temperaturschwankungen der Umgebungstemperatur und des Fingers des Benutzers haben nun einen viel geringeren Einfluss auf den Farbkippeffekt. Die schlechten Eigenschaften des Datenträgerkörpers sind somit kompensiert. Da Graphit in seiner Erscheinung bereits dunkel ist, ist der erforderliche Schwarzdruck für die Farbschicht 6 unnötig, sodass das Einbringen des Materials 5 keine zusätzlichen Arbeitsschritte bei der Herstellung bedeutet.

In Figur 2 ist eine alternative Ausgestaltung des Datenträgerkörpers der Figur 1 dargestellt. Hier ist der Datenträgerkörper laminiert, was durch den Schichtenaufbau 7 angedeutet ist. Die Einzelnen Schichten können gleiches oder unterschiedliches Material, insbesondere PVC, PE, PET oder ABS sein. Die mit diesen Materialien verbundenen schlechten Wärmeeigenschaften sind durch das beeinflussende Material, zum Beispiel Graphit oder Paraffin kompensiert. Bevorzugt lässt sich das beeinflussende Material in den Körper einlaminieren oder mittels Drucktechniken auf eine der Schichten vor dem Laminierprozess auftragen.

In Figur 3 ist eine Weiterbildung des in Figur 2 gezeigten Datenträgers 1 dargestellt. Hier ist ein Eingabemittel 9, insbesondere ein Dehnungsmessstreifen, in den Kartenkörper unterhalb des beeinflussenden Materials 5 eingebracht. Die Dehnung des Datenträgers 1, angedeutet durch den Pfeil, bewirkt eine messbare Verzerrung des Datenträgerkörpers, die im Chipmodul 2 ausgewertet und als Eingabe gedeutet wird. Durch die Berührung mittels Finger wird ebenfalls eine thermische Energieänderung auf die Farbschicht 6 einwirken, wodurch die oben beschriebenen Effekte auftreten. Alternativ zu einer Wärmeableitschicht kann auch eine Wärmespeicherschicht auf Paraffinbasis eingebracht werden. Damit wird der Farbkippeffekt verlangsamt.

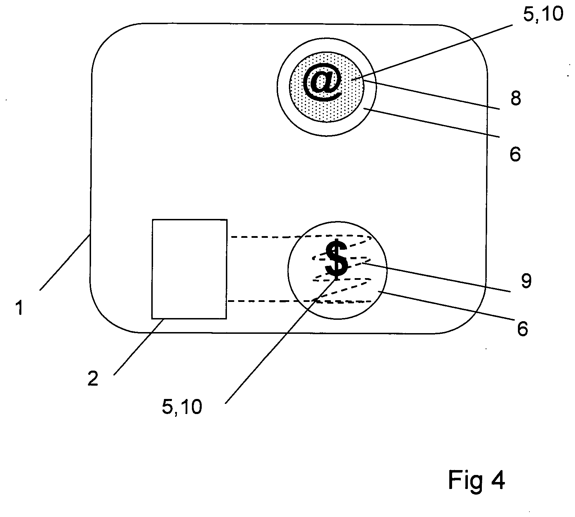

Es ist denkbar, unterhalb der Farbschicht 6 nicht vollständig das beeinflussende Material 5 anzuordnen. Insbesondere ist denkbar das Material 5 als ein geometrisches Muster, eine Figur, ein Zeichen, ein Buchstabe oder eine Zahl auszuformen. Dieses Muster wird dann bei Erwärmung und/oder Abkühlung der Farbschicht 6 sichtbar. Dies kann als Sicherheitselement die Echtheit des Datenträgers 1 verifizieren. Ausführungen dazu sind in der Figur 4 dargestellt. Der Datenträger 1 ist in Draufsicht dargestellt. Im oberen Bereich ist ein kreisrunder Bereich einer thermochromen Farbschicht 6 dargestellt. Unterhalb dieser Farbschicht 6 ist ein Eingabemittel 8 vorgesehen. Zwischen der Farbschicht 6 und dem Eingabemittel 8 ist das beeinflussende Material 5 in Form eines alphanumerischen Zeichens, hier einem @-Zeichen, eingebracht. Ist das Material 5 ein Graphitmaterial, so ist es wärmeableitend. Durch Druck des Eingabemittels 8 mittels Finger des Benutzers wird der Bereich 6 einen Farbkippeffekt erzeugen. Hierbei wird die Wärmeableitfunktion des Materials 5 erkennbar, indem das @-Zeichen sichtbar wird. Wesentlich intensiver wird das @-Zeichen jedoch bei der darauffolgenden Abkühlung des Bereiches 6 deutlich, da aufgrund der viel höheren Wärme- und Temperaturleiteigenschaft, das @-Zeichen wesentlich schneller Wärme abgibt und somit der Farbkippeffekt an den Stellen oberhalb des @-Zeichens schneller als im Rest des Bereichs 6 stattfindet. Die Abkühlung erfolgt zum Teil auf die Rückseite und in das Innere des Datenträgers 1. Das @-Zeichen kann nun als Sicherheitsmerkmal erkannt werden, sodass der Datenträger 1 als echt verifiziert ist.

In Figur 4 ist ein zweites Ausführungsbeispiel eines Sicherheitselements dargestellt. Wieder ist ein Bereich 6 einer thermochromen Farbschicht kreisförmig dargestellt. Unterhalb des Bereiches 6 befindet sich ein resistives Element 9, im einfachsten Fall ein Widerstand, welches mit dem Chipmodul 2 elektrisch leitend verbunden ist. Dieses resisitve Element 9 kann ebenfalls als Dehnungsmessstreifen ausgestaltet sein und somit zusätzlich ein Eingabemittel 8 sein. Als Muster 10 ist hier ein $-Zeichen als charakteristische Form des beeinflussenden Materials 5 gezeigt. Das Heizelement 9 wird nun durch das Chipmodul 2 angesteuert. Aufgrund eines elektrischen Stroms wird in dem Widerstand eine Temperaturänderung stattfinden, wodurch die oberhalb befindliche thermochrome Farbschicht 6 einen Farbwechsel macht. Bei Abkühlung wird ähnlich wie oben beschrieben der stark unterschiedliche Wärme- und Temperaturleitfaktor zur Darstellung des $-Zeichens führen, was als Sicherheitsmerkmal die Echtheit verifiziert. Alternativ sind auch zwei Farbkippeffekte vorsehbar, sodass bei Berührung mittels Fingers ein erster Farbwechsel und bei Ansteuerung mittels Heizelement 9 ein zweiter Farbwechsel stattfindet.

Der Abkühleffekt wird nun als optisches Feedback ein bestimmtes Zeichen, eine geometrische Figur oder ein Muster hervorrufen. Dieses Muster kann vom Benutzer als Sicherheitsmerkmal verwendet werden. Alternativ ist denkbar, dass mittels Infrarot-Abtastung seitens des Terminals die thermodynamischen Eigenschaften des Datenträgers 1 erfasst und ausgewertet werden, sodass der Datenträger 1 zusätzlich ein maschinenlesbares Sicherheitsmerkmal aufweist.

### Bezugszeichenliste

- 1: Tragbarer Datenträger
- 2: Chipmodul
- 3: Kontaktfeld für kontaktbehaftete Kommunikation
- 4: Antenne für kontaktlose Kommunikation
- 5: Wärmeableitmaterial oder Wärmespeicherndes Material
- 6: Thermochrome Farbschicht
- 7: Schichtaufbau des Datenträgerkörpers
- 8: Eingabemittel, insbesondere Dehnungsmessstreifen
- 9: Resistives Element
- 10: Muster, Form, alphanumerisches Zeichen

## Patentansprüche

1. Tragbarer Datenträger (1), insbesondere eine Chipkarte, aufweisend:
- einen Datenträgerkörper und
- zumindest bereichsweise eine, für einen Betrachter des Datenträgers sichtbar angeordnete thermochrome Farbschicht (6) im Datenträgerkörpers, wobei durch Einwirken einer thermischen Energieänderung auf die Farbschicht (6) ein Farbwechsel der thermochromen Farbschicht (6) hervorgerufen ist, **dadurch gekennzeichnet, dass** unterhalb der thermochromen Farbschicht (6) ein den Farbwechsel beeinflussendes Material (5) in den Datenträgerkörper eingebracht ist, wobei das beeinflussende Material (5) ein Wärmeableitmaterial, insbesondere ein Graphitmaterial ist.

2. Tragbarer Datenträger (1) nach Anspruch 1, wobei die thermochrome Farbschicht (6) und das beeinflussende Material (5) ein Sicherheits- bzw. Echtheitsmerkmal für den tragbaren Datenträger (1) darstellen und wobei das beeinflussende Material (5) in Form geometrischer Figuren, Muster und/oder alphanumerischer Zeichen (10) in den Datenträgerkörper eingebracht ist.

3. Tragbarer Datenträger (1) nach einem der vorhergehenden Ansprüche, wobei der Datenträger (1) weiterhin ein integriertes Chipmodul (2) und unterhalb der thermochromen Farbschicht (6) ein Eingabemittel (8), insbesondere in Form eines Dehnungsmessstreifens aufweist.

4. Tragbarer Datenträger (1) nach einem der vorhergehenden Ansprüche, wobei der Datenträgerkörper (7) laminiert ist und das beeinflussende Material (5) einlaminierbar ist.

5. Tragbarer Datenträger (1) nach einem der vorhergehenden Ansprüche, wobei unterhalb des beeinflussenden Materials (5) weiterhin ein resistives Element (9) in den Datenträgerkörper eingebracht ist und durch Ansteuerung des resistiven Elements (9) der Farbwechsel zusätzlich beeinflussbar ist.

6. Sicherheitselement für einen tragbaren Datenträger aufweisend
- einen Datenträgerkörper und
- zumindest bereichsweise eine für einen Betrachter des Datenträgers sichtbar angeordnete thermochrome Farbschicht im Datenträgerkörpers, wobei durch Einwirken einer thermischen Energieänderung auf die Farbschicht ein Farbwechsel an der thermochromen Farbschicht hervorgerufen ist, **dadurch gekennzeichnet dass** unterhalb der thermochromen Farbschicht ein den Farbwechsel beeinflussendes Material in den Datenträgerkörper eingebracht ist, das beeinflussende Material ein Graphitmaterial und in Form geometrischer Figuren, Muster und/oder alphanumerischer Zeichen unmittelbar unterhalb der thermochromen Farbschicht eingebracht ist.

7. Verfahren zum Beeinflussen des Farbwechsels einer thermochromen Farbschicht im tragbaren Datenträger mittels eines in den Datenträgerkörper unterhalb der Farbschicht eingebrachten Materials, insbesondere ein Graphitmaterial, mit den Verfahrensschritten:
- zumindest bereichsweises Ändern der thermischen Energie des Datenträgerkörpers und
- Ableiten der geänderten thermischen Energie mittels des eingebrachten Materials derart, dass der mit der thermochromen Farbschicht erzeugte Farbwechsel an der Oberseite des Datenträgers beschleunigt wird.

## Claims

1. A portable data carrier (1), in particular a chip card, having:
- a data carrier body and
- at least regionally a thermochromic ink layer (6) in the data carrier body that is arranged so as to be visible for a viewer of the data carrier, wherein by the action of a thermal energy change on the ink layer (6) a color change of the thermochromic ink layer (6) is caused, **characterized in that** a material (5) that influences the color change is incorporated in the data carrier body below the thermochromic ink layer (6), wherein the influencing material (5) is a heat sink material, in particular a graphite material.

2. The portable data carrier (1) according to claim 1, wherein the thermochromic ink layer (6) and the influencing material (5) constitute a security or authenticity feature for the portable data carrier (1) and wherein the influencing material (5) is incorporated in the data carrier body in the form of geometric figures, patterns and/or alphanumeric characters (10).

3. The portable data carrier (1) according to any of the preceding claims, wherein the data carrier (1) further has an integrated chip module (2) and, below the thermochromic ink layer (6), an input means (8), in particular in the form of a strain gauge.

4. The portable data carrier (1) according to any of the preceding claims, wherein the data carrier body (7) is laminated and the influencing material (5) can be incorporated by lamination.

5. The portable data carrier (1) according to any of the preceding claims, wherein further a resistive element (9) is incorporated in the data carrier body below the influencing material (5), and the color change is influenceable in addition by driving the resistive element (9).

6. A security element for a portable data carrier having
- a data carrier body and
- at least regionally a thermochromic ink layer in the data carrier body that is arranged so as to be visible for a viewer of the data carrier, wherein by the action of a thermal energy change on the ink layer a color change on the thermochromic ink layer is caused, **characterized in that** a material that influences the color change is incorporated in the data carrier body below the thermochromic ink layer, the influencing material is a graphite material and is incorporated in the form of geometrical figures, patterns and/or alphanumeric characters immediately below the thermochromic ink layer.

7. A method for influencing the color change of a thermochromic ink layer in the portable data carrier by means of a material incorporated in the data carrier body below the ink layer, in particular a graphite material, having the method steps of:
- at least regionally changing the thermal energy of the data carrier body and
- dissipating the altered thermal energy by means of the material incorporated in such a manner that the color change produced with the thermochromic ink layer at the upper side of the data carrier is accelerated.

## Revendications

1. Support de données (1) portable, en particulier une carte à puce, comprenant :
- un corps de support de données et
- au moins en certaines zones, une couche d'encre (6) thermochromique, agencée de façon visible pour un observateur du support de données, dans le corps de support de données, cependant que, par action d'une modification thermique d'énergie sur la couche d'encre (6), un changement de couleur de la couche d'encre (6) thermochromique est engendré, **caractérisé en ce que**, au-dessous de la couche d'encre (6) thermochromique, un matériau (5) influençant le changement de couleur est incorporé dans le corps de support de données, cependant que le matériau (5) influençant est un matériau dissipant la chaleur, en particulier un matériau en graphite.

2. Support de données (1) portable selon la revendication 1, cependant que la couche d'encre (6) thermochromique et le matériau (5) influençant représentent une caractéristique de sécurité ou d'authenticité pour le support de données portable (1), et cependant que le matériau (5) influençant est incorporé sous forme de figures géométriques, de motifs et/ou de caractères alphanumériques (10) dans le corps de support de données.

3. Support de données (1) portable selon une des revendications précédentes, cependant que le support de données portable (1) comporte en outre un module puce (2) intégré et, au-dessous de la couche d'encre (6) thermochromique, un moyen d'entrée (8), en particulier sous forme d'une jauge extensométrique.

4. Support de données (1) portable selon une des revendications précédentes, cependant que le corps de support de données (7) est laminé et que le matériau (5) influençant peut être introduit par laminage.

5. Support de données (1) portable selon une des revendications précédentes, cependant que, au-dessous du matériau (5) influençant, en outre un élément résistif (9) est incorporé dans le corps de support de données, et que, par commande de l'élément résistif (9), le changement de couleur est additionnellement influençable.

6. Elément de sécurité destiné à un support de données portable, comprenant :
- un corps de support de données et
- au moins en certaines zones, une couche d'encre thermochromique, agencée de façon visible pour un observateur du support de données, dans le corps de support de données, cependant que, par action d'une modification thermique d'énergie sur la couche d'encre, un changement de couleur à la couche d'encre thermochromique est engendré, **caractérisé en ce que**, au-dessous de la couche d'encre thermochromique, un matériau influençant le changement de couleur est incorporé dans le corps de support de données, que le matériau (5) influençant est un matériau en graphite et est incorporé sous forme de figures géométriques, de motifs et/ou de caractères alphanumériques directement au-dessous de la couche d'encre thermochromique.

7. Procédé destiné à influencer le changement de couleur d'une couche d'encre thermochromique dans le support de données portable, au moyen d'un matériau incorporé dans le corps de support de données au-dessous de la couche d'encre, en particulier un matériau en graphite, comprenant les étapes :
- au moins en certaines zones, modification de l'énergie thermique du corps de support de données, et
- dissipation de l'énergie thermique modifiée au moyen du matériau incorporé, de telle façon que le changement de couleur généré avec la couche d'encre thermochromique est accéléré à la face de dessus du support de données.
